# EUROPEAN PATENT SPECIFICATION

(11) **EP 1 410 853 B1**
(45) Date of publication and mention of the grant of the patent: **26.06.2013**
(21) Application number: 03256489.0
(22) Date of filing: 15.10.2003
(51) Int. Cl.: B08B 9/032, F01D 25/00, F01D 5/00

(54) **Apparatus and method for cleaning airfoil internal cavities**
Vorrichtung und Verfahren zur Reinigung von Hohlräumen von Turbinenschaufeln
Appareil et procédé de nettoyage des cavités internes d'aubes de turbines

(30) Priority: 15.10.2002 US 271681
(43) Date of publication of application: 21.04.2004
(73) Proprietor: United Technologies Corporation, Hartford, CT 06101 (US)
(72) Inventor: Velez, Jr., Ramon M., Windsor, CT 06095 (US); Draghi, Peter J., Simsbury, CT 06070 (US)
(74) Representative: Leckey, David Herbert

(56) References cited:
- US-A- 2 737 192
- US-A- 5 507 306
- US-A- 5 679 174

## Description

### BACKGROUND OF THE INVENTION

The present invention relates to a device and a method for cleaning internal cavities within an airfoil portion of an engine component.

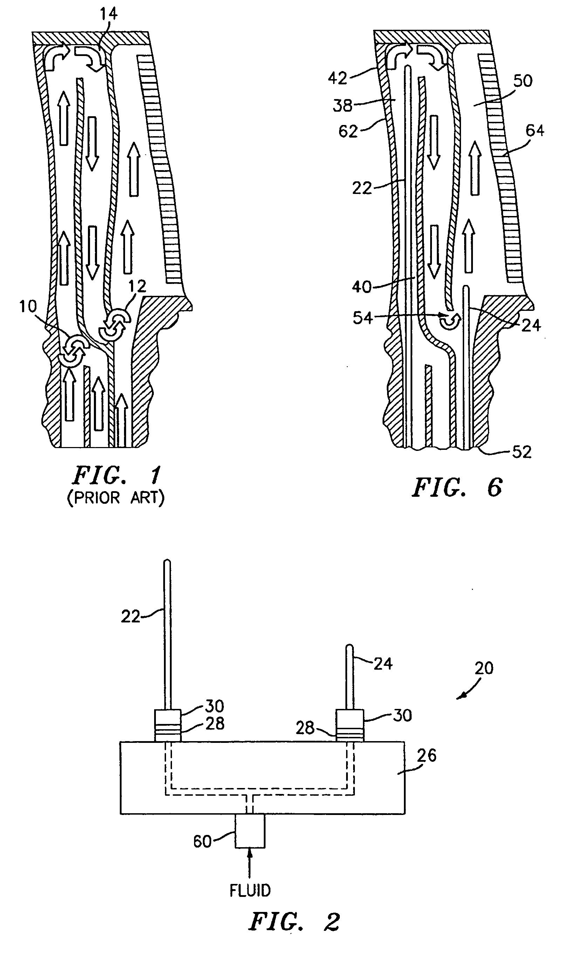

Current processes for internally cleaning engine components having internal passageways involves the use of an autoclave process and a high pressure wash. The high pressure wash uses a manifold with probes introduced into a corresponding number of root openings of the internal passageways being cleaned. High pressure water is then pumped through the manifold and the probes. Depending on the configuration of the internal passageways, as shown in FIG. 1, this can create turbulence at locations 10 and 12, thus reducing the free flow. The internal flow of the high pressure wash also misses a "dead zone" area 14 which can not be cleaned effectively. This is due in large part to the fact that each of the probes has a nozzle at its tip.

Apparatus for cleaning passageways within engine components is described in US-A-5679174 and US-A-5507306. Apparatus for cleaning cavities of hollow propeller blades is disclosed in US-A-2737192 which discloses a device in accordance with the preamble of claim 1 and a method in accordance with the preamble of claim 6

### SUMMARY OF THE INVENTION

Accordingly, it is an object of the present invention to provide an improved method for cleaning the internal passageways of a component.

It is a further object of the present invention to provide an improved device for cleaning the internal passageways of a component.

The foregoing objects are attained by the method and the device of the present invention.

In accordance with the present invention, a method and an apparatus for cleaning the internal passageways of a component, such as an engine component, is provided.

The method comprises the steps set forth in claim 6.

The device comprises the features set forth in claim 1.

Other details of the apparatus and the method for cleaning airfoil internal cavities are set forth in the following detailed description and the accompanying drawings wherein like reference numerals depict like elements.

### BRIEF DESCRIPTION OF THE DRAWINGS

FIG. 1 is a schematic illustration of a prior art system for cleaning internal cavities of an airfoil;
FIG. 2 illustrates a device for cleaning internal passageways within a component in accordance with the present invention;
FIG. 3 illustrates a first embodiment of a first probe used in the device of FIG. 2;
FIG. 4 illustrates a second embodiment of a first probe used in the device of FIG. 2;
FIG. 5 illustrates a second probe used in the device of FIG. 2; and
FIG. 6 is a schematic illustration of the device for cleaning internal passageways in use.

### DETAILED DESCRIPTION OF THE PREFERRED EMBODIMENT(S)

Referring now to the drawings, FIG. 2 illustrates a device 20 for cleaning internal cavities within a component, such as a component to be used in an engine such as a jet engine or an industrial turbine engine. The component may be a blade or a vane to be used in the engine. Such components typically have a root portion and an airfoil portion. Within the root portion and the airfoil portion are internal cooling passageways which require cleaning.

As shown in FIG. 2, the device 20 includes a first probe 22, a second probe 24, and a manifold 26. The first probe 22 and the second probe 24 may be formed from any suitable material known in the art such as metallic materials used for syringe needles. Each of the first and second probes 22 and 24 may be connected to the manifold 26 by any suitable means known in the art. For example, each of the probes 22 and 24 may be connected to the manifold 26 by an externally threaded member 28 integrally formed on the manifold 26 and a compression nut 30 joined to the respective probe and having an internal thread for mating with the external thread of the member 28. Alternatively, each of the probes 22 and 24 may be welded to the manifold 26 or integrally formed with the manifold 26.

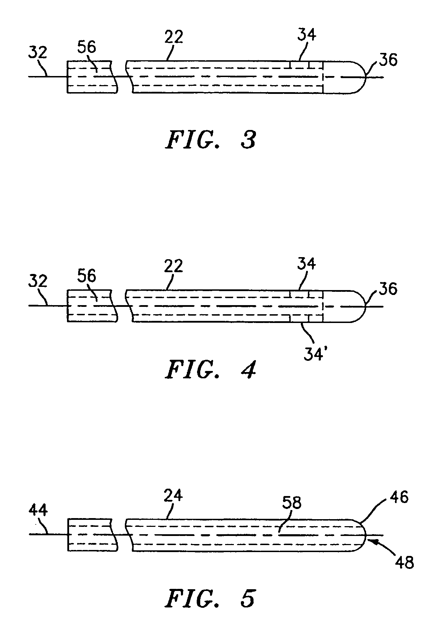

Referring now to FIG. 3, the first probe 22 has a first longitudinal axis 32 and at least one nozzle 34 adjacent a closed tip end 36 of the probe. Each nozzle 34 is oriented perpendicular to the longitudinal axis 32. As shown in FIG. 6, the first probe 22 has a length sufficient to place it in close proximity, preferably within 0.025 inches (0.635 mm), to an end wall 38 of a first internal passageway 40 within a component 42 to be cleaned.

FIG. 4 illustrates an alternative embodiment of the first probe 22. In this embodiment, the probe 22 has two nozzles 34 and 34'. Both nozzles 34 and 34' are oriented substantially perpendicular, preferably perpendicular, to the longitudinal axis 32. Further, the nozzles 34 and 34' are offset by 180 degrees.

FIG. 5 illustrates the second probe 24. As can be seen from this figure, the second probe 24 has a second longitudinal axis 44, a tip end 46 and a nozzle 48. The nozzle 48 is preferably oriented along the longitudinal axis 44 to dispense a cleaning fluid into a second internal passageway 50. The second probe 24 has a length shorter than the length of the first probe 22. The length of the second probe 24 however should be greater than a distance from the root portion 52 of the component 42 to a point where the second internal passageway 50 intersects an outlet 54 of the first passageway 40 to avoid the creation of unwanted turbulence and to create a suction effect which draws cleaning fluid exiting the outlet 54 into the passageway 50.

While not shown in the drawings, the manifold 26 has internal passageways which communicate with the internal passageways 56 and 58 of probes 22 and 24 respectively. The manifold 26 also has a fluid inlet 60 through which the manifold 26 can be connected to a source of cleaning fluid (not shown). The cleaning fluid may be water or water mixed with a cleaning agent.

Referring now to FIG. 6, the internal passageways 40 and 50 may be cleaned by inserting the first and second probes 22 and 24 into the passageways 40 and 50 respectively through openings in the root portion 52. The internal passageway 40 is preferably the internal passageway closest to a leading edge 62 of the component 42, while the internal passageway 50 is preferably the internal passageway closes to a trailing edge 64 of the component 42. After the probes 22 and 24 have been inserted into the passageways 40 and 50, cleaning fluid at a pressure sufficient to clean internal surfaces of the passageways 40 and 50 is dispensed through the nozzles 34 and/or 34' and 48. In a preferred method of the present invention, the cleaning fluid is dispensed at a pressure in the range of 10.34 MPa and 68.95 MPa (1.5 Ksi and 10.0 Ksi).

It has been found that the method of the present invention substantially avoids the creation of unwanted turbulence in the passageways 40 and 50 which turbulence interferes with the cleaning operation. Further, it has been found that the fluid dispensed through the nozzles 34 and/or 34' flows into all areas of the passageway 40. As a result, there are no "dead zones". This is because the fluid exiting the nozzles 34 and/or 34' fans out within the internal passageway 40.

While cleaning may be performed using only the high pressure wash method described above, for certain components, it may be desirable to subject the component to an ultrasonic cleaning cycle prior to insertion of the probes 22 and 24. The ultrasonic cleaning cycle may be formed in any suitable manner known in the art using any suitable cleaning solution known in the art, such as an alkaline rust remover solution or an aqueous degreaser solution. Preferably, the ultrasonic cleaning cycle is performed for a time period in the range of 1.0 hour to 2.0 hours at a frequency in the range of 20 KHz to 104 KHz.

It is apparent that there has been described above a method and apparatus for cleaning airfoil internal cavities which fully satisfies the objects, means, and advantages set forth hereinbefore. While the present invention has been described in the context of specific embodiments thereof, other alternatives, modifications, and variations will become apparent to those skilled in the art having read the foregoing description. Accordingly, it is intended to embrace those alternatives, modifications, and variations which fall within the broad scope of the appended claims.

## Claims

1. A device (20) for cleaning internal passageways in an airfoil portion of an engine component, said device comprising:
a first probe (22) for extending into a first internal passageway (40) closest to a leading edge of said airfoil portion; and
a second probe (24) for extending into a second internal passageway (50) closest to a trailing edge of said airfoil component;
said first probe (22) having a first longitudinal axis (32) and at least one nozzle (34;34'); and
wherein said second probe (24) has a longitudinal axis (44), a tip end (46) and a nozzle (48) in said tip end (46),
**characterised in that**
said nozzle in said first probe is oriented perpendicular to said first longitudinal axis of said first probe and **in that** said nozzle (48) in said second probe (24) is oriented along said longitudinal axis (44) of said second probe (24).

2. A device according to claim 1, further comprising said first probe (22) having two nozzles (34,34') offset by 180 degrees.

3. A device according to claim 2, wherein each of said nozzles (34,34') is oriented perpendicular to the first longitudinal axis (32).

4. A device according to any preceding claim, wherein said first probe (22) has a length greater than the length of the second probe (24).

5. A device according to any preceding claim wherein said first and second probes (22,24) are connected to a common manifold (26).

6. A method for cleaning internal passageways (40,50) within a turbine engine component having a leading edge and a trailing edge, the method comprising the steps of:
providing a device (20) having a first probe (22) for dispensing a cleaning fluid, which probe has a longitudinal axis (32) and at least one nozzle (34,34');
inserting said first probe (22) into a first internal passageway (40) via an opening in a root portion of said turbine engine component; and
dispensing a cleaning fluid through said at least one nozzle (34;34') at a pressure sufficient to clean surfaces of said first internal passageway (40);
said device further comprising a second probe (24) for dispensing said cleaning fluid, which second probe (24) has a longitudinal axis (44), a tip end (46), and a nozzle (48) in said tip end (46); and
inserting said second probe (24) into a second internal passageway (50); and
dispensing said cleaning fluid through said nozzle (48) in said second probe (24) at said pressure sufficient to clean internal surfaces of said second internal passageway (50); and wherein:
said step of inserting said first probe (22) comprises inserting said first probe (22) into an internal passageway (40) closest to said leading edge of said component; and
said step of inserting said second probe (24) comprises inserting said second probe (24) into an internal passageway (50) near said trailing edge of said component
**characterised in that**
said nozzle in said first probe is oriented perpendicular to said longitudinal axis (32) of said first probe and **in that** said nozzle in said second probe is oriented along said longitudinal axis (44) of said second probe (24).

7. A method according to claim 6, wherein said dispensing step comprises dispensing said cleaning fluid through said at least one nozzle (34;34) at a pressure in the range of 10.34 to 68.95 MPa (1.5 Ksi to 10.0 Ksi).

8. A method according to claim 6 or 7, wherein said dispensing step comprises dispensing said cleaning fluid through two nozzles (34,34') offset by 180 degrees.

9. A method according to any of claims 6 to 8, further comprising:
subjecting said component with said internal passageways (40,50) to an ultrasonic cleaning cycle prior to inserting said first dispensing means (22) into said internal passageway (40), and said ultrasonic cleaning cycle being carried out for a time period in the range of 1.0 hour to 2.0 hours and at a frequency in the range of 20 - 104 KHz.

10. A method according to any of claims 6 to 9 wherein said first internal passageway has an outlet which intersects said second internal passageway, said second probe (24) having a length greater than a distance from a root portion of the airfoil to the intersection of said outlet and said passageway in order to prevent the creation of turbulence.

## Patentansprüche

1. Vorrichtung (20) zum Reinigen interner Durchgänge in einem Strömungsprofilbereich einer Maschinenkomponente, wobei die Vorrichtung aufweist :
eine erste Sonde (22) zum Erstrecken in einen ersten internen Durchgang (40), der zu einer Vorderkante des Strömungsprofilbereichs nächstliegend ist: und
eine zweite Sonde (24) zum Erstrecken in einen zweiten internen Durchgang (50), der zu einer Hinterkante der Strömungsprofilkomponente nächstliegend ist;
wobei die erste Sonde (22) eine erste Längsachse (32) und wenigstens eine Düse (34; 34') aufweist; und
wobei die zweite Sonde (24) eine Längsachse (44), ein Spitzenende (46) und eine Düse (48) in dem Spitzenende (46) aufweist,
**dadurch gekennzeichnet, dass**
die Düse in der ersten Sonde orthogonal zu der ersten Längsachse der ersten Sonde ausgerichtet ist, und
die Düse (48) in der zweiten Sonde (24) längs der Längsachse (44) der zweiten Sonde (24) ausgerichtet ist.

2. Vorrichtung gemäß Anspruch 1, weiter aufweisend, dass die zweite Sonde (22) zwei um 180 Grad versetzte Düsen (34, 34') aufweist.

3. Vorrichtung gemäß Anspruch 2, wobei jede der Düsen (34, 34') orthogonal zu der ersten Längsachse (32) ausgerichtet ist.

4. Vorrichtung gemäß einem der vorhergehenden Ansprüche, wobei die erste Sonde (22) eine Länge aufweist, die größer als die Länge der zweiten Sonde (24) ist.

5. Vorrichtung gemäß einem der vorhergehenden Ansprüche, wobei die erste und die zweite Sonde (22, 24) mit einem gemeinsamen Verteiler (26) verbunden sind.

6. Verfahren zum Reinigen interner Durchgänge (40, 50) in einer Turbinenmaschinenkomponente, welche eine Vorderkante und eine Hinterkante aufweist, wobei das Verfahren die Schritte aufweist:
Vorsehen einer Vorrichtung (20), welche eine erste Sonde (22) zum Abgeben einer Reinigungsflüssigkeit aufweist, wobei die Sonde eine Längsachse (32) und wenigstens eine Düse (34, 34') aufweist;
Einführen der ersten Sonde (22) in einen ersten internen Durchgang (40) über eine Öffnung in einem Wurzelteil der Turbinenmaschinenkomponente; und
Abgeben einer Reinigungsflüssigkeit durch die wenigstens eine Düse (34; 34') bei einem Druck, der ausreicht, um Oberflächen des internen Durchgangs (40) zu reinigen;
wobei die Vorrichtung weiter eine zweite Sonde (24) zum Abgeben der Reinigungsflüssigkeit aufweist, wobei die zweite Sonde (24) eine Längsachse (44), ein Spitzenende (46) und eine Düse (48) in dem Spitzenende (46) aufweist: und
Einführen der zweiten Sonde (24) in den zweiten internen Durchgang (50); und
Abgeben der Reinigungsflüssigkeit durch die Düse (48) in der zweiten Sonde (24) bei dem Druck, welcher ausreicht, um interne Oberflächen des zweiten internen Durchgangs (50) zu säubern; und wobei:
der Schritt des Einfuhrens der ersten Sonde (22) es aufweist die erste Sonde (22) in einen internen Durchgang (40), der zu der Vorderkante der Komponente nächstliegend ist, einzuführen; und
der Schritt des Einführens der zweiten Sonde (24) es aufweist die zweite Sonde (24) in einen internen Durchgang (50), der nahe der Hinterkante der Komponente ist, einzuführen,
**dadurch gekennzeichnet, dass**
die Düse in der ersten Sonde orthogonal zu der Längsachse (32) der ersten Sonde ausgerichtet ist, und
die Düse in der zweiten Sonde längs der Längsachse (44) der zweiten Sonde (24) ausgerichtet ist.

7. Verfahren gemäß Anspruch 6, wobei der Abgabeschritt es aufweist die Reinigungsflüssigkeit durch die wenigstens eine Düse (34; 34') bei einem Druck in dem Bereich von 10,34 bis 68,95 MPa (1,5 Ksi bis 10,0 Ksi) abzugeben.

8. Verfahren gemäß Anspruch 6 oder 7, wobei der Abgabeschritt es aufweist die Reinigungsflüssigkeit durch zwei um 180 Grad versetzte Düsen (34, 34') abzugeben.

9. Verfahren gemäß einem der Ansprüche 6 bis 8, weiter aufweisend:
Aussetzen der Komponente mit den internen Durchgängen (40, 50) einem Ultraschallsäuberungszyklus vor dem Einführen der ersten Abgabemittel (22) in den internen Durchgang (40), und wobei der Ultraschallsäuberungszyklus für eine Zeitdauer im Bereich von 1,0 bis 2, 0 Stunden und bei einer Frequenz im Bereich von 20 bis 104 kHz ausgeführt wird.

10. Verfahren gemäß einem der Ansprüche 6 bis 9, wobei der erste interne Durchgang einen Auslass aufweist, der den zweiten internen Durchgang kreuzt, wobei die zweite Sonde (24) eine Lange aufweist, die größer als ein Abstand von einem Wurzelteil des Strömungsprofils zu der Kreuzung des Auslasses und des Durchgangs ist, um die Erzeugung von Turbulenzen zu vermeiden.

## Revendications

1. Dispositif (20) pour le nettoyage de passages internes d'une portion de profil d'aile d'un composant de moteur, ledit dispositif comprenant :
une première sonde (22) pour s'étendre dans un premier passage interne (40) le plus proche d'un bord d'attaque de ladite portion de profil d'aile ; et
une seconde sonde (24) pour s'étendre dans un second passage interne (50) le plus proche d'un bord de fuite dudit composant de profil d'aile ;
ladite première sonde (22) ayant un premier axe longitudinal (32) et au moins une buse (34 ; 34') ; et
dans lequel ladite seconde sonde (24) a un axe longitudinal (44), une extrémité de pointe (46) et une buse (48) dans ladite extrémité de pointe (46),
**caractérisé en ce que**
ladite buse de ladite première sonde est orientée perpendiculairement audit premier axe longitudinal de ladite première sonde et **en ce que** ladite buse (48) de ladite seconde sonde (24) est orientée le long dudit axe longitudinal (44) de ladite seconde sonde (24).

2. Dispositif selon la revendication 1, comprenant par ailleurs ladite première sonde (22) ayant deux buses (34, 34') décalées de 180 degrés.

3. Dispositif selon la revendication 2, dans lequel chacune desdites buses (34, 34') est orientée perpendiculairement au premier axe longitudinal (32).

4. Dispositif selon l'une quelconque des revendications précédentes, dans lequel ladite première sonde (22) a une longueur plus grande que la longueur de la seconde sonde (24).

5. Dispositif selon l'une quelconque des revendications précédentes, dans lequel lesdites première et seconde sondes (22, 24) sont raccordées à un collecteur commun (26).

6. Procédé de nettoyage de passages internes (40, 50) à l'intérieur d'un composant de moteur à turbine ayant un bord d'attaque et un bord de fuite, le procédé comprenant les étapes consistant à :
fournir un dispositif (20) ayant une première sonde (22) pour distribuer un fluide de nettoyage, laquelle sonde a un axe longitudinal (32) et au moins une buse (34, 34') ;
insérer ladite première sonde (22) dans un premier passage interne (40) via une ouverture dans une portion d'emplanture dudit composant de moteur à turbine ; et
distribuer un fluide de nettoyage à travers ladite au moins une buse (34 ; 34') à une pression suffisante pour nettoyer des surfaces dudit premier passage interne (40) ;
ledit dispositif comprenant en outre une seconde sonde (24) pour distribuer ledit fluide de nettoyage, ladite seconde sonde (24) ayant un axe longitudinal (44), une extrémité de pointe (46) et une buse (48) dans ladite extrémité de pointe (46) ; et
insérer ladite seconde sonde (24) dans un second passage interne (50) ; et
distribuer ledit fluide de nettoyage à travers ladite buse (48) dans ladite seconde sonde (24) à ladite pression suffisante pour nettoyer des surfaces internes dudit second passage interne (50) ; et
dans lequel :
ladite étape d'insertion de ladite première sonde (22) comprend l'insertion de ladite première sonde (22) dans un passage interne (40) le plus proche dudit bord d'attaque dudit composant ; et
ladite étape d'insertion de ladite seconde sonde (24) comprend l'insertion de ladite seconde sonde (24) dans un passage interne (50) proche dudit bord de fuite dudit composant,
**caractérisé en ce que**
ladite buse de ladite première sonde est orientée perpendiculairement audit axe longitudinal (32) de ladite première sonde et **en ce que** ladite buse de ladite seconde sonde est orientée selon ledit axe longitudinal (44) de ladite seconde sonde (24).

7. Procédé selon la revendication 6, dans lequel ladite étape de distribution comprend la distribution dudit fluide de nettoyage à travers ladite au moins une buse (34 ; 34') à une pression dans la plage de 10,34 à 68,95 MPa (1,5 Ksi à 10,0 Ksi).

8. Procédé selon la revendication 6 ou la revendication 7, dans lequel ladite étape de distribution comprend la distribution dudit fluide de nettoyage à travers deux buses (34, 34') décalées de 180 degrés.

9. Procédé selon l'une quelconque des revendications 6 à 8, comprenant par ailleurs l'étape consistant à :
soumettre ledit composant avec lesdits passages internes (40, 50) à un cycle de nettoyage ultrasonique avant d'insérer lesdits premiers moyens de distribution (22) dans ledit passage interne (40), et ledit cycle de nettoyage ultrasonique étant effectué pendant une période de temps dans la plage de 1,0 heure à 2,0 heure et à une fréquence dans la plage de 20 à 104 kHz.

10. Procédé selon l'une quelconque des revendications 6 à 9, dans lequel ledit premier passage interne a une sortie qui coupe ledit second passage interne, ladite seconde sonde (24) ayant une longueur plus grande qu'une distance allant d'une portion d'emplanture du profil d'aile à l'intersection de ladite sortie et dudit passage afin d'empêcher la création de turbulences.
